(19) Europäisches Patentamt
European Patent Office
Office européen des brevets

(11) **EP 4 603 518 A1**

(12) **EUROPEAN PATENT APPLICATION**
published in accordance with Art. 153(4) EPC

(43) Date of publication:
**20.08.2025 Bulletin 2025/34**

(21) Application number: **22962516.5**

(22) Date of filing: **31.10.2022**

(51) International Patent Classification (IPC):
***C08F 214/22** (2006.01)* ***C08F 220/06** (2006.01)*
***H01M 4/131** (2010.01)* ***H01M 4/1391** (2010.01)*
***H01M 4/62** (2006.01)* ***H01M 10/0525** (2010.01)*

(52) Cooperative Patent Classification (CPC):
Y02E 60/10

(86) International application number:
**PCT/CN2022/128800**

(87) International publication number:
**WO 2024/082336 (25.04.2024 Gazette 2024/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.10.2022 CN 202211266304**

(71) Applicant: **Contemporary Amperex Technology (Hong Kong) Limited**
**Central (HK)**

(72) Inventors:
- **FENG, Wei**
  **Ningde, Fujian 352100 (CN)**
- **OUYANG, Chuying**
  **Ningde, Fujian 352100 (CN)**
- **SUN, Chengdong**
  **Ningde, Fujian 352100 (CN)**
- **LIU, Huihui**
  **Ningde, Fujian 352100 (CN)**
- **FENG, Lingyun**
  **Ningde, Fujian 352100 (CN)**
- **DUAN, Lianwei**
  **Ningde, Fujian 352100 (CN)**

(74) Representative: **Gong, Jinping**
**CocreateIP**
**Neumarkter Straße 21**
**81673 München (DE)**

(54) **POLYMER, CONDUCTIVE SLURRY, POSITIVE ELECTRODE PLATE, SECONDARY BATTERY AND ELECTRIC DEVICE**

(57) This application relates to a polymer, a conductive slurry, a positive electrode plate, a secondary battery, and an electric apparatus. The polymer includes a structural unit represented by formula (1) and structural unit(s) represented by formula (2), where in formula (2), R1, R2, and R3 are each independently selected from a hydrogen atom, a halogen atom, or a substituted or unsubstituted C1-C10 alkyl group. The polymer in embodiments of this application exhibits improved dispersion performance. When the polymer is applied in a secondary battery, especially in the preparation of a conductive slurry, it can act as a dispersant, making the particles in the slurry less likely to agglomerate and able to disperse evenly, thereby ensuring the electrochemical performance of the secondary battery.

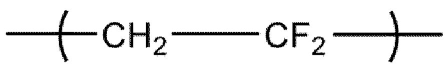
formula (1);

and

EP 4 603 518 A1

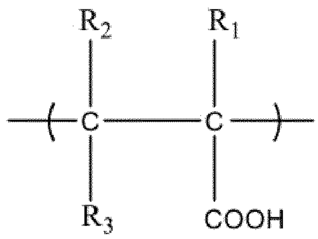

formula (2).

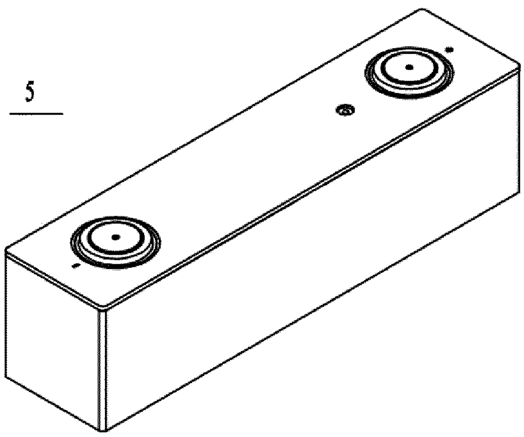



FIG. 1

## Description

### CROSS-REFERENCE TO RELATED APPLICATIONS

This application claims priority to Chinese Patent Application No. 202211266304.3, filed on October 17, 2022 and entitled "POLYMER, CONDUCTIVE SLURRY, POSITIVE ELECTRODE PLATE, SECONDARY BATTERY, AND ELECTRIC APPARATUS", which is incorporated herein by reference in its entirety.

### TECHNICAL FIELD

This application relates to the technical field of battery production, and in particular, to a polymer, a conductive slurry, a positive electrode plate, a secondary battery, and an electric apparatus.

### BACKGROUND

Secondary batteries have characteristics such as high capacity and long service life, and thus are widely used in electronic devices such as mobile phones, laptop computers, electric bicycles, electric vehicles, electric aircrafts, electric ships, electric toy cars, electric toy ships, electric toy aircrafts, and electric tools.

As the application of batteries continues to expand, the requirements for the performance of secondary batteries have become increasingly stringent. To improve the performance of secondary batteries, optimization and improvement of the electrode plates in secondary batteries are commonly pursued. However, the film layers in the current electrode plate have homogeneous performance. When such electrode plate is applied to a secondary battery, the electrochemical performance of the secondary battery is poor.

### SUMMARY

This application has been made in view of the preceding issue and is intended to provide a polymer, a conductive slurry, a positive electrode plate, a secondary battery, and an electric apparatus.

A first aspect of this application provides a polymer, where the polymer includes a structural unit represented by formula (1) and structural unit(s) represented by formula (2),

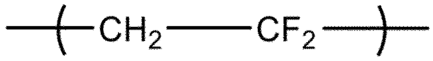 formula (1);

and

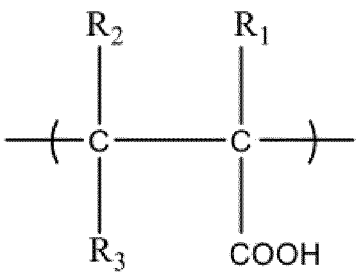 formula (2);

where

in formula (2), $R_1$, $R_2$, and $R_3$ are each independently selected from a hydrogen atom, a halogen atom, or a substituted or unsubstituted C1-C10 alkyl group; and $R_1$, $R_2$, and $R_3$ are each independently selected from a hydrogen atom, a halogen atom, or a substituted or unsubstituted C1-C5 alkyl group.

The polymer in the embodiments of this application exhibits improved dispersion performance and still has certain adhesion. When the polymer is applied in secondary batteries, especially in the preparation of a conductive slurry, it can act as a dispersant and can also act as an auxiliary material for the binder, thus reducing the use of a binder with high adhesion. As a result, the particles in the slurry are less likely to agglomerate and can be evenly dispersed. Moreover, the adhesion between particles and the adhesion between particles and current collectors can be improved, thereby ensuring the structural stability of the electrode plate and thus ensuring the electrochemical performance of the secondary battery.

In some embodiments, the structural unit(s) represented by formula (2) include(s) one or more selected from

structural units represented by formulas (2-1) to (2-10):

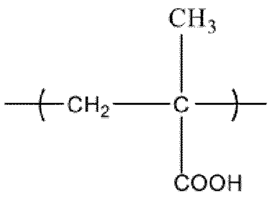 formula (2-1), 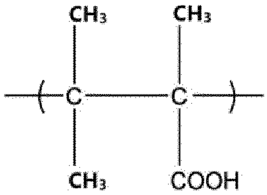 formula (2-2),

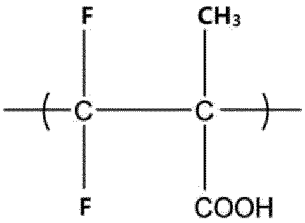 formula (2-3), 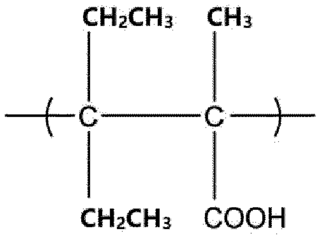 formula (2-4),

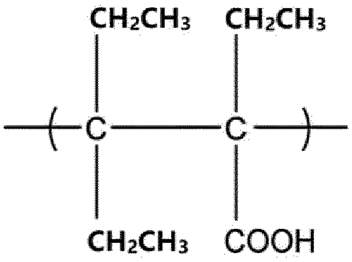 formula (2-5), 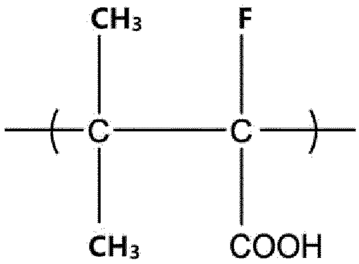 formula (2-6),

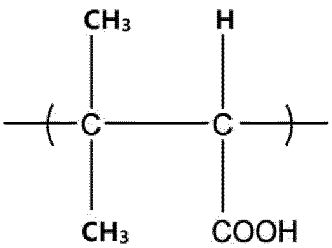 formula (2-7), 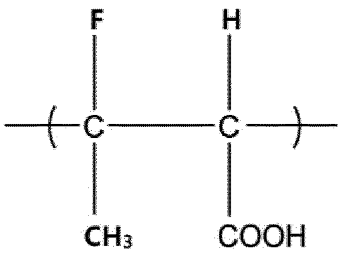 formula (2-8),

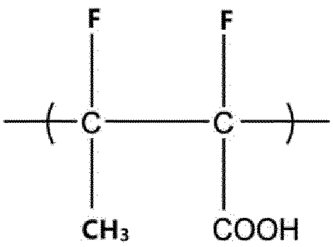 formula (2-9), and 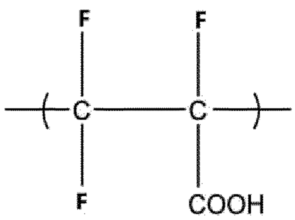 formula (2-10).

In some embodiments, a weight-average molecular weight of the polymer is $1.5\times10^5$ Da to $2.0\times10^5$ Da;
In some embodiments, the number of structural units represented by formula (1) is n, where 100≤n≤150; and/or the number of structural units represented by formula (2) is m, where 100≤m≤150. When the weight-average molecular weight of the polymer is within the above range, the polymer can have a certain solubility, thereby ensuring the viscosity of the polymer; and the polymer has low viscosity rebound, so it can adhere well to active materials and the like.

In some embodiments, the polymer meets at least one of conditions (1) to (3): (1) a viscosity of the polymer is C mPa*s, where 500≤C≤3000; (2) a glass transition temperature of the polymer is Tg°C, where 150≤Tg≤180; and (3) a crystallinity of the polymer under differential scanning calorimetry DSC testing is 40% to 50%.

Therefore, when the viscosity of the polymer of this application is within the above range, the polymer has moderate viscosity. When the polymer is applied to a secondary battery, it can evenly disperse the active material particles

and the like, and meanwhile is less likely to cause agglomeration between the particles, so that the performance of the electrode plate is more homogeneous, which is conducive to giving full play to the electrochemical performance of the secondary battery. When the glass transition temperature of the polymer is within the above range, it can improve the toughness of the electrode plate, enhance the mechanical performance of the electrode plate, and make the viscosity of the polymer moderate. When the crystallinity of the polymer is within the above range, the polymer hardly affects the circulation of molecules in the electrolyte, which can ensure the charge and discharge performance of the secondary battery.

In some embodiments, the polymer is particulate, and a median particle size by volume of the polymer is Dv50 μm, where 1≤Dv50≤5. When the median particle size by volume of the polymer is within the above range, the polymer can be dissolved in the slurry system to a certain extent and play the role of a binder and a dispersant.

A second aspect of this application further provides a method for preparing a polymer, where the method includes: providing a first monomer and a second monomer comprising a structural unit represented by formula (2); and polymerizing the first monomer and the second monomer in the presence of a free radical initiator to prepare a polymer, where the first monomer includes vinylidene fluoride; and the structural unit represented by formula (2) is as follows:

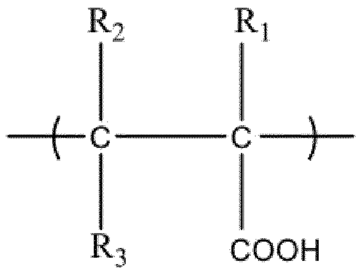
formula (2);

where

in formula (2), $R_1$, $R_2$, and $R_3$ are each independently selected from a hydrogen atom, a halogen atom, or a substituted or unsubstituted C1-C10 alkyl group; and $R_1$, $R_2$, and $R_3$ are each independently selected from a hydrogen atom, a halogen atom, or a substituted or unsubstituted C1-C5 alkyl group.

In some embodiments, the step of polymerizing the first monomer and the second monomer in the presence of a free radical initiator to prepare a polymer includes: homopolymerizing the first monomer in the presence of a free radical initiator to prepare a first block polymer; copolymerizing the first monomer, the second monomer, and the first block polymer in the presence of a free radical initiator to prepare a second block polymer; and copolymerizing the first monomer and the second block polymer in the presence of a free radical initiator to prepare the polymer.

In some embodiments, based on a total molar mass of the first monomer and the second monomer, a ratio of a molar percentage of the second monomer to a molar percentage of the first monomer is A, where 0.10≤A≤0.30.

A third aspect of this application further provides a method for preparing a conductive slurry, where the method includes: mixing a polymer with a solvent to prepare a prepared glue solution; and dispersing a conductive agent in the prepared glue solution to prepare a conductive slurry; where the polymer includes the polymer according to any one of the embodiments of the first aspect of this application or the polymer obtained using the method according to any one of the embodiments of the second aspect of this application.

In some embodiments, based on a total mass of the conductive slurry, a mass percentage of the polymer is denoted as p%; and based on the total mass of the conductive slurry, a mass percentage of the conductive agent is denoted as q%; where 2≤q/p≤20, and further optionally, 3≤q/p≤15.

A fourth aspect of this application further provides a conductive slurry, where the conductive slurry includes a conductive agent and a polymer, where the polymer includes the polymer according to any one of the embodiments of the first aspect of this application and the polymer obtained using the method according to any one of the embodiments of the second aspect of this application.

In some embodiments, based on a total mass of the conductive slurry, a mass percentage of the polymer is denoted as p%; and based on the total mass of the conductive slurry, a mass percentage of the conductive agent is denoted as q%; where 2≤q/p≤20, and further optionally, 3≤q/p≤15.

A fifth aspect of this application further provides a method for preparing a positive electrode plate, where the method includes: providing a positive electrode current collector; mixing a positive electrode active material, a polymer, a conductive agent, and a binder with a solvent to prepare a positive electrode slurry, applying the positive electrode slurry onto the positive electrode current collector, and curing the resulting product to form a positive electrode plate; where the polymer includes the polymer according to any one of the embodiments of the first aspect of this application or the polymer obtained using the method according to any one of the embodiments of the second aspect of this application.

In some embodiments, the step of mixing a positive electrode active material, a polymer, a conductive agent, and

a binder with a solvent to prepare a positive electrode slurry includes: mixing the polymer with the solvent to prepare a prepared glue solution; dispersing the conductive agent in the prepared glue solution to prepare a conductive slurry; and mixing the conductive slurry with the positive electrode active material to prepare the positive electrode slurry.

In some embodiments, based on a total mass of the conductive slurry, a mass percentage of the polymer is denoted as p%; and based on the total mass of the conductive slurry, a mass percentage of the conductive agent is denoted as q%; where $2 \leq q/p \leq 20$, and further optionally, $3 \leq q/p \leq 15$.

A sixth aspect of this application further provides a positive electrode plate, where the positive electrode plate is prepared using the method according to any one of the embodiments of the fifth aspect of this application.

A seventh aspect of this application further provides a secondary battery including the positive electrode plate according to any one of the embodiments of the sixth aspect of this application.

An eighth aspect of this application further provides an electric apparatus including the secondary battery according to the seventh aspect of this application.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic diagram of an embodiment of a secondary battery in this application.
FIG. 2 is a schematic exploded view of the embodiment of the secondary battery in FIG. 1.
FIG. 3 is a schematic diagram of an embodiment of a battery module in this application.
FIG. 4 is a schematic diagram of an embodiment of a battery pack in this application.
FIG. 5 is a schematic exploded view of the embodiment of the battery pack shown in FIG. 4.
FIG. 6 is a schematic diagram of an embodiment of an electric apparatus including the secondary battery in this application as a power source.

The figures are not necessarily drawn to scale.

Reference signs:

1. battery pack; 2. upper box body; 3. lower box body; 4. battery module;
5. secondary battery; 51. housing; 52. electrode assembly;
53. cover plate; and
6. electric apparatus.

## DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the

terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

An electrode plate typically includes a current collector and a film layer disposed on the current collector. During preparation of an electrode plate, an active material is bonded to a current collector. To ensure the adhesion between the particles of the active material and between the active material and the current collector, a binder is typically used to ensure adhesion performance, and this is beneficial for forming an interface film on a surface of the film layer. Binders are generally polymer compounds, and usually can be made from polyvinyl alcohol PVA, polytetrafluoroethylene PTFE, polyvinylidene fluoride PVDF, and the like. Polyvinylidene fluoride PVDF has excellent chemical properties, physical properties, and thermal processing properties, and thus has been widely and deeply studied.

The inventors have found that when PVDF is used as a binder in secondary batteries, an excessive amount of PVDF may cause agglomeration between active material particles, leading to uneven distribution of active material particles and easily increasing the internal resistance of the secondary battery. It generally requires the addition of N-methylpyrrolidone NMP as a dispersant, and they are used in conjunction with each other. In contrast, too little PVDF may result in poor film formation, and the film layer may easily peel off from the current collector during charge and discharge processes.

Therefore, the inventors have improved the composition structure of PVDF starting from improving the performance of PVDF itself so that the improved PVDF can have good dispersion performance and maintain a certain degree of adhesion. The technical solutions of this application will be described in detail next.

<u>**Polymer**</u>

According to a first aspect, this application provides a polymer.

The polymer includes a structural unit represented by formula (1),

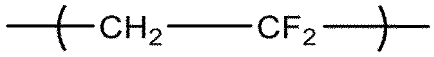

formula (1).

The polymer includes structural unit(s) represented by formula (2),

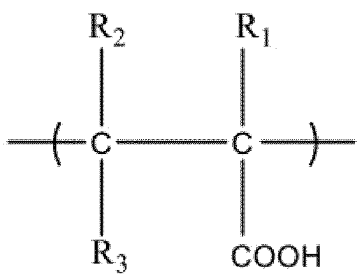

formula (2).

The structural unit represented by formula (1) is derived from vinylidene fluoride VDF, which is the main monomer for synthesizing the polymer. The carbon chain of the polymer formed by VDF is zigzag-shaped. After the hydrogen atoms are replaced by highly electronegative fluorine atoms, the adjacent fluorine atoms repel each other, causing the fluorine atoms not to be in the same plane and instead be helically distributed along the carbon chain. Therefore, the carbon chain is surrounded by a series of stable fluorine atoms, forming a spatial barrier that makes it difficult for other atoms or groups to enter its structure and damage the carbon chain, thus exhibiting extremely high chemical stability and thermal stability.

Additionally, due to the low polarizability of the carbon-fluorine bonds in the polymer, the molecular structure is dense, with good hydrophobicity and exhibiting oleophilic properties, and the polymer also exhibits high insulation properties.

The structural unit(s) represented by formula (2) contain(s) a carboxyl grafted group. The carboxyl group can enhance the cohesion of the polymer. As the carboxyl group is a polar group, introducing polar groups into side chains of the polymer can improve the dispersion performance of the polymer. When the polymer is applied to secondary batteries, the polymer is easier to wet the surface of the conductive agent and other particles, increasing the wetting speed.

The structural unit represented by formula (1) exhibits oleophilic properties, and the structural unit represented by formula (2) exhibits hydrophilicity. The structural units represented by formula (1) and formula (2) are used in combination, making the polymer both hydrophilic and oleophilic, which enables the polymer to uniformly disperse the conductive agent and other particles in the system, demonstrating good dispersion performance.

The structural units represented by formula (1) and formula (2) are used in combination, making the resulting polymer have appropriate crystallinity, thereby improving the cohesion of the polymer itself, ensuring that the polymer still has a certain degree of adhesion. However, since the adhesion strength of the polymer is relatively poor, the polymer can be used in conjunction with other binders to supplement and enhance the adhesion performance to the conductive agent and the like.

In this way, the polymer in the embodiments of this application exhibits improved dispersion performance and still has certain adhesion. When the polymer is applied in secondary batteries, especially in the preparation of a conductive slurry, it can act as a dispersant and can also act as an auxiliary material for the binder, thus reducing the use of a binder with high adhesion. As a result, the particles in the slurry are less likely to agglomerate and can be evenly dispersed. Moreover, the adhesion between particles and the adhesion between particles and current collectors can be improved, thereby ensuring the structural stability of the electrode plate and thus ensuring the electrochemical performance of the secondary battery.

In some embodiments, in formula (2), $R_1$ is selected from a hydrogen atom, a halogen atom, or a substituted or unsubstituted C1-C10 alkyl group; and $R_2$ and $R_3$ are each independently selected from a hydrogen atom, a halogen atom, or a substituted or unsubstituted C1-C10 alkyl group. When substituted, the substituent may be optionally a halogen atom, or may be other atoms such as a sulfur atom.

The halogen atom may be a fluorine atom, a chlorine atom, a bromine atom, or the like.

The alkyl group may be a straight chain or a straight-chain alkyl group. For example, the alkyl group may be a C1-C10 alkyl group, a C1-C8 alkyl group, a C1-C5 alkyl group, a C2-C8 alkyl group, or a C2-C6 alkyl group. Specifically, the alkyl group includes a methyl group, an ethyl group, a propyl group, an isopropyl group, a butyl group, an isobutyl group, a sec-butyl group, a tert-butyl group, a cyclobutyl group, a pentyl group, an isopentyl group, a neopentyl group, a tert-pentyl group, a cyclopentyl group, a hexyl group, a cyclohexyl group, a heptyl group, a cycloheptyl group, an octyl group, a cyclooctyl group, a nonyl group, a decyl group, and the like. Additionally, the alkyl group may be optionally substituted; and the substituent thereof may be a halogen atom or other atoms such as a sulfur atom.

When the structural unit(s) represented by formula (2) constitute(s) part of the polymer, the structural units represented by formula (2) may be directly connected to each other, or the structural unit(s) represented by formula (2) may be alternately connected with the structural unit represented by formula (1). For example, the atom C connected to $R_1$ in formula (2) may be connected to $-CH_2$ in formula (1), and the atom C connected to $R_2$ in formula (2) may be connected to $-CF_2$ in formula (1).

As the number of carbon atoms in $R_1$, $R_2$, and $R_3$ is relatively small, side chain structures of the structural unit(s) represented by formula (2) will not be too long, making it difficult to form three-dimensional cross-linked polymers during the polymerization process, and the polymerization method mainly manifests as linear polymerization. To be specific, when the structural unit(s) represented by formula (2) is/are polymerized, the side chains basically do not interfere with the polymerization process, thereby ensuring the normal progress of polymerization. Moreover, the molecular chain structure of the resulting polymer has high symmetry, which makes the polymer easier to crystallize, and further improves the adhesion of the polymer. Additionally, as the number of carbon atoms in the side chain structures increases, hydrophobic properties of the side chains are enhanced, while relatively short side chains can ensure the overall hydrophilicity of the structural unit(s) represented by formula (2).

Optionally, $R_1$, $R_2$, and $R_3$ are each independently selected from a hydrogen atom, a halogen atom, or a substituted or unsubstituted C1-C5 alkyl group.

Optionally, the structural unit(s) represented by formula (2) include(s) one or more selected from structural units represented by formulas (2-1) to (2-10):

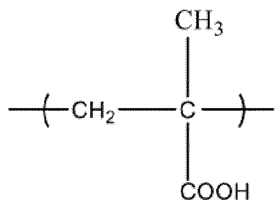 formula (2-1), 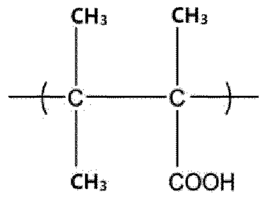 formula (2-2),

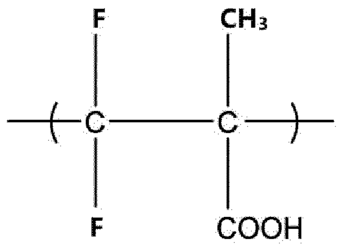 formula (2-3), 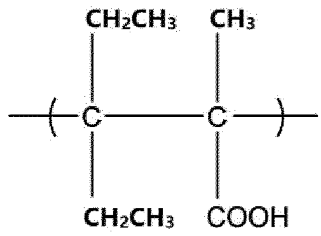 formula (2-4),

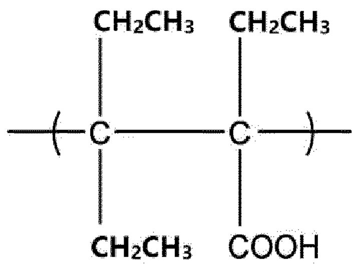 formula (2-5), 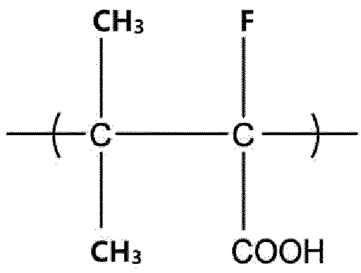 formula (2-6),

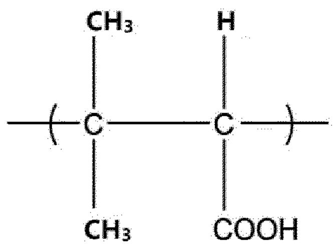 formula (2-7), 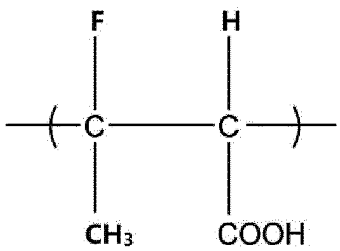 formula (2-8),

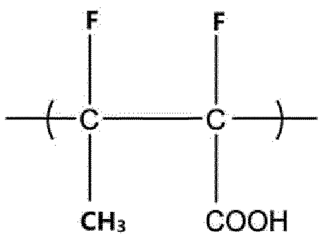 formula (2-9), and 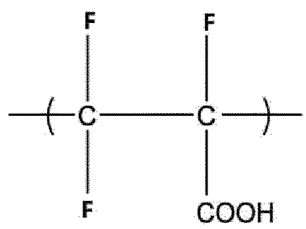 formula (2-10).

The structural unit(s) represented by formula (2) in the above structures can, when they are introduced into the polymer, ensure that the structural unit(s) represented by formula (2) enhance the cohesion of the polymer and improve the adhesion performance of the polymer. Moreover, they can introduce hydrophilic properties, improving the dispersion performance of the polymer.

In some embodiments, a weight-average molecular weight of the polymer is $1.5\times10^5$ Da to $2.0\times10^5$ Da; When the weight-average molecular weight of the polymer is within the above range, the polymer can have a certain solubility, thereby ensuring the viscosity of the polymer; and the polymer has low viscosity rebound, so it can adhere well to active materials and the like. For example, the weight-average molecular weight of the polymer may be $1.5\times10^5$ Da, $1.6\times10^5$ Da, $1.7\times10^5$ Da, $1.8\times10^5$ Da, $1.9\times10^5$ Da, or $2.0\times10^5$ Da, or in a range defined of any two of these values.

In some embodiments, the number of structural units represented by formula (1) is n, where $100\leq n\leq150$; and optionally, $100\leq n\leq133$. For example, n may be 100, 110, 120, 125, 130, 133, 138, 140, 145, 150, or in a range defined by any two of these values.

When the structural units represented by formula (1) constitute a molecular chain of the polymer, the molecular chain has high symmetry, the polymer exhibits improved crystallization performance, and the polymer mainly contributes to the adhesion performance of the polymer. As a result, when the number n of structural units represented by formula (1) is within the above range, this can ensure that the polymer has moderate viscosity, and the moderate-viscosity polymer does not easily cause agglomeration of active materials, conductive agents, and the like.
In some embodiments, the number of structural units represented by formula (2) is m, where $100 \leq m \leq 150$; and optionally, $100 \leq m \leq 133$. For example, m may be 100, 110, 120, 125, 130, 133, 138, 140, 145, 150, or in a range defined by any two of these values.
When the structural units represented by formula (2) constitute a molecular chain of the polymer, they introduce functional groups such as carboxyl groups into the side chains of the polymer, improving the hydrophilicity of the polymer, thereby improving the dispersion performance of the polymer. Additionally, introducing carboxyl groups can also improve the cohesion of the polymer and enhance the adhesion performance of the polymer. As a result, when the number m of structural units represented by formula (2) is within the above range, this can ensure that the polymer has moderate viscosity and it has a certain degree of dispersion performance.
In some embodiments, the viscosity of the polymer is C mPa*s, where $500 \leq C \leq 3000$.
When the viscosity of the polymer of this application is within the above range, the polymer has moderate viscosity. When the polymer is applied to a secondary battery, it can evenly disperse the active material particles and the like, and meanwhile is less likely to cause agglomeration between the particles, so that the performance of the electrode plate is more homogeneous, which is conducive to giving full play to the electrochemical performance of the secondary battery. For example, the viscosity of the polymer may be 500 mPa*s, 600 mPa*s, 700 mPa*s, 800 mPa*s, 900 mPa*s, 1000 mPa*s, 1200 mPa*s, 1500 mPa*s, 1800 mPa*s, 1900 mPa*s, 2000 mPa*s, 2500 mPa*s, or in a range defined by any two of these values.
In some embodiments, a glass transition temperature of the polymer is Tg°C, where $150 \leq Tg \leq 180$.
When the glass transition temperature of the polymer is within the above range, it can improve the toughness of the electrode plate, enhance the mechanical performance of the electrode plate, and make the viscosity of the polymer moderate. For example, the glass transition temperature of the polymer may be 150°C, 155°C, 160°C, 165°C, 170°C, 175°C, 180°C, or in a range defined by any two of these values.
In some embodiments, a crystallinity of the polymer under differential scanning calorimetry DSC testing is 40% to 50%.
When the crystallinity of the polymer is within the above range, the polymer hardly affects the circulation of molecules in the electrolyte, which can ensure the charge and discharge performance of the secondary battery. For example, the crystallinity of the polymer may be 40%, 42%, 45%, 48%, 49%, 50%, or in a range defined by any two of these values.
In some embodiments, the polymer is particulate, and a median particle size by volume of the polymer is Dv50 μm, where $1 \leq Dv50 \leq 5$.
When the median particle size by volume of the polymer is within the above range, the polymer can be dissolved in the slurry system to a certain extent and play the role of a binder and a dispersant. For example, the median particle size by volume Dv50 μm of the polymer may be 1 μm, 1.5 μm, 2 μm, 2.5 μm, 3 μm, 3.5 μm, 4 μm, 4.5 μm, or 5 μm, or in a range defined by any two of these values.
In this application, the median particle size by volume $D_v50$ of the material has the meaning well known in the art, which indicates the particle size corresponding to the time when the cumulative volume distribution percentage of the material reaches 50%, and can be tested by instruments and methods well known in the art. For example, $D_v50$ can be easily measured in accordance with a particle size distribution laser diffraction method in GB/T 19077-2016 using a laser particle size analyzer, for example, a laser particle size analyzer of Mastersizer 2000E from Malvern Instruments Ltd. of UK.
In this application, a specific surface area of a material has a meaning well known in the art, and can be measured using an instrument and method known in the art. For example, the specific surface area can be tested using the nitrogen adsorption specific surface area analysis test method in accordance with GB/T 19587-2017 and calculated using the BET (Brunauer Emmett Teller) method. The nitrogen adsorption specific surface area analysis test can be carried out using the Tri-Star 3020 specific surface area pore size analysis tester from Micromeritics of the USA.

## Method for preparing a polymer

According to a second aspect, this application proposes a method for preparing a polymer. The method can be used for preparing the polymer according to any one of the embodiments of the first aspect of this application.
The method includes the following steps.
Step S100: Provide a first monomer and a second monomer including a structural unit represented by formula (2).
Step S200: Polymerize the first monomer and the second monomer in the presence of a free radical initiator to

prepare a polymer.

The first monomer includes vinylidene fluoride; and the structural unit represented by formula (2) is as follows:

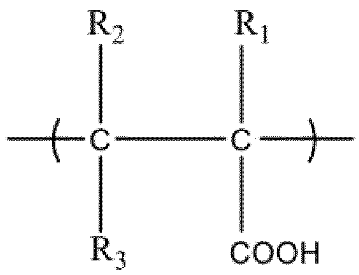

formula (2);

where

in formula (2),

> $R_1$ is selected from a hydrogen atom, a halogen atom, or a substituted or unsubstituted C1-C10 alkyl group;
> $R_2$ and $R_3$ are each independently selected from a hydrogen atom, a halogen atom, or a substituted or unsubstituted C1-C10 alkyl group. Optionally, $R_1$, $R_2$, and $R_3$ are each independently selected from a hydrogen atom, a halogen atom, or a substituted or unsubstituted C1-C5 alkyl group.

The first monomer and the second monomer copolymerize to prepare a polymer, and the order of addition of the first monomer and the second monomer can be adjusted according to production needs. For example, part of the first monomer may be added first to undergo homopolymerization, then the second monomer and the first monomer can be added to undergo copolymerization. Alternatively, the first monomer may be added first to undergo copolymerization; then the second monomer may be added to undergo copolymerization; and then a block polymer obtained from the copolymerization of the first monomer and a block polymer obtained from the copolymerization of the second monomer are polymerized.

Regardless of the polymerization method, the resulting polymer can have -CH2-CF2- as the basic main chain, supplemented by the structural unit represented by formula (2), and can introduce carboxyl groups into the side chains of the polymer so as to improve the adhesion and dispersion performance of the polymer. The polymerization method of this application is relatively simple, and the resulting polymer exhibits improved dispersion performance and still has a certain degree of adhesion.

The polymerization of the polymer can be carried out through suspension polymerization or emulsion polymerization. The amount of dispersant adsorbed on the polymer and produced by suspension polymerization is small and easy to remove, resulting in a product with higher purity; and the post-treatment process is relatively simple. The polymerization rate of emulsion polymerization is faster, the molecular weight of the product is relatively high, and the polymer can be polymerized at relatively high temperatures.

The suspension polymerization process may be carried out as follows: adding a certain amount of deionized water and dispersant into a reactor, sealing the reactor, evacuating the reactor, replacing the oxygen with an inert gas such as nitrogen, evacuating the reactor again, and filling the reactor with nitrogen so that the pressure in the reactor is slightly higher than atmospheric pressure and the oxygen content in the reactor meets the standard; stirring the system in the reactor, raising the temperature to about 50°C, and increasing the pressure to about 3.5 MPa; adding part of the monomer, an initiator, and the like to start polymerization; during the polymerization process, continuing to add such monomer, initiator, and the like, maintaining the temperature and pressure in the reactor until all the monomers are added, lowering the pressure to about 2.8 MPa, stopping stirring, and ending the reaction.

The emulsion polymerization process may be carried out as follows: evacuating a reactor, and replacing the oxygen with an inert gas such as nitrogen so that the oxygen content in the reactor meets the standard; and then adding deionized water, emulsifier, initiator, and the like into the reactor, and adding a small amount of monomer; after that, heating the reactor to the reaction temperature, and continuously adding such monomer and maintaining the pressure in the reactor as the reaction proceeds until the reaction ends. During the reaction process, the polymer undergoes coagulation, washing, and drying, and the like to obtain the final polymer product.

In some embodiments, step S200 includes the following steps.

Step S210: Homopolymerize the first monomer in the presence of a free radical initiator to prepare a first block polymer.

The first monomer is pre-homopolymerized to prepare the first block polymer, which can ensure that the molecular chain of the polymer is a linear main chain, thereby ensuring a certain degree of regularity of the polymer. This is conducive to improving the crystallization ability of the polymer.

Step S220: Copolymerize the first monomer, the second monomer, and the first block polymer in the presence of a free radical initiator to prepare a second block polymer.
The second monomer is introduced, enabling the first monomer and the second monomer to continue polymerization on the basis of the first block polymer, and carboxyl groups are introduced into the side chains of the polymer so as to improve the adhesion and dispersion performance of the polymer.
Step S230: Copolymerize the first monomer and the second block polymer in the presence of a free radical initiator to prepare the polymer.
On the basis of the second block polymer, the first monomer continues to be polymerized to ensure that the polymer is a linear molecular chain as a whole.
In some embodiments, based on a total molar mass of the first monomer and the second monomer, a ratio of a molar percentage of the second monomer to a molar percentage of the first monomer is A, where $0.10 \leq A \leq 0.30$.
The total molar mass of the first monomer and the second monomer is a sum of the molar masses of the first monomer and the second monomer added during the entire reaction process. The molar percentage of the first monomer is a percentage of the molar mass of the first monomer to the total molar mass. The molar percentage of the second monomer is a percentage of the molar mass of the second monomer to the total molar mass. For example, the ratio A of the molar percentage of the second monomer to the molar percentage of the first monomer may be 0.10, 0.15, 0.20, 0.25, 0.30, or in a range defined by any two of these values.
When the ratio A of the molar percentage of the second monomer to the molar percentage of the first monomer is within the above range, it can ensure both the adhesion and dispersion performance of the polymer.
In some embodiments, emulsifiers and solvents can be added to facilitate emulsion polymerization.
Emulsifiers include perfluorooctanoic acid alkali metal salts and the like.

## Method for preparing a conductive slurry

According to a third aspect, this application proposes a method for preparing a conductive slurry.
The inventors have found that conductive agents such as conductive carbon black are important components in the battery production process, and their dispersion performance in the slurry greatly affects the resistance of the electrode plate and the performance of the secondary battery. Conductive carbon black particles are micron-sized, with a large specific surface area, and are extremely prone to agglomeration. The traditional feeding method is to directly mix conductive carbon black powder and a positive electrode active material into a solvent, and this makes it difficult to disperse the mixture evenly through mechanical stirring and requires a long time to stir the slurry, thus affecting production efficiency and the conductive performance. In the related art, the conductive carbon black is also prepared into a conductive slurry, but the conductive slurry requires an additional dispersant, surfactant, and other additives. However, different systems have different additives, leading to compatibility issues with the slurry system during the preparation of the secondary battery slurry. Additionally, the binder PVDF used in the battery production process has a molecular weight of 500,000 to 1,200,000, resulting in high viscosity of the glue solution, making it difficult to evenly disperse the conductive carbon black, leading to high resistance of the electrode plate. Even if the stirring time is extended to achieve even dispersion, the dispersed carbon black particles still agglomerate after the slurry is left to stand, and the slurry also exhibits increased viscosity and gelation, affecting the production use of the slurry.
To address the above problem, the inventors propose a method for preparing a conductive slurry, the method includes:

mixing a polymer with a solvent to prepare a prepared glue solution; and
dispersing a conductive agent in the prepared glue solution to prepare a conductive slurry, where
the polymer includes the polymer according to any one of the embodiments of the first aspect of this application and the polymer obtained using the method according to any one of the embodiments of the second aspect of this application.

Specifically, polymer powder may be added to the solvent for mixing to prepare a glue solution; then the conductive agent such as conductive carbon black is dispersed in the prepared glue solution to prepare the conductive slurry. As a result, the conductive slurry prepared in this manner has more even dispersion of the conductive agent, preventing agglomeration due to the small particle size of the conductive agent, resulting in a more uniform distribution of the conductive agent, which can reduce the resistance of the positive electrode film layer to a certain extent and improve the electrochemical performance of the secondary battery. In this application, the solvent in the prepared glue solution may be selected from commonly used solvent types in positive electrode slurry such as N-methylpyrrolidone NMP.
Further, based on a total mass of the conductive slurry, a mass percentage of the polymer is denoted as p%; where $0.5 \leq q \leq 2.5$.
When the mass percentage of the polymer is within the above range, this can ensure that the conductive agent is evenly dispersed in the polymer, and the conductive slurry has a certain viscosity, for example, greater than 40 mPa*s. The

conductive slurry has high stability, and the conductive agent resists sedimentation; the conductive slurry has moderate viscosity, so it basically does not experience viscosity rebound or gelation, which is beneficial for the long-term storage of the conductive slurry. For example, the mass percentage of the polymer may be 0.5%, 1%, 1.5%, 2%, 2.5%, or in a range defined by any two of these values.

Further, based on the total mass of the conductive slurry, a mass percentage of the conductive agent is denoted as q%; where $7.5 \le q \le 15.5$.

When the mass percentage of the conductive agent is within the above range, this can ensure the content of the solvent, thereby facilitating the dissolution and dispersion of the polymer; and the conductive agent is used in a moderate amount, making the overall fluidity of the conductive slurry better, which is conducive for feeding in industrial production. For example, the mass percentage of the conductive agent may be 7.5%, 8%, 8.5%, 9%, 9.5%, 10.5%, 11.0%, 12.0%, 13.0%, 13.5%, 14.0%, 15.0%, 15.5%, or in a range defined by any two of these values.

Further, $2 \le q/p \le 20$. Optionally, $3 \le q/p \le 15$. For example, q/p may be 3, 4, 5, 6, 7, 8, 9, 10, 12, 15, 16, 18, 19, 20, or in a range defined by any two of these values. When q/p is within the above range, the dispersant polymer exhibits improved dispersion performance for the conductive agent, resulting in an evenly dispersed conductive agent. Moreover, the resulting conductive slurry has stable performance, which helps reduce the film resistance of the positive electrode plate when the conductive slurry is applied to the positive electrode plate.

## Conductive slurry

According to a fourth aspect, this application proposes a conductive slurry.

The conductive slurry includes a conductive agent and a polymer, where the polymer includes the polymer according to any one of the embodiments of the first aspect of this application and the polymer obtained using the method according to any one of the embodiments of the second aspect of this application.

The conductive slurry may also be prepared using the method according to any one of the embodiments of the third aspect of this application.

The conductive slurry of this application exhibits improved dispersion performance, resists agglomeration and sedimentation, and can ensure uniform and stable performance during long-term storage.

Optionally, based on a total mass of the conductive slurry, a mass percentage of the polymer is denoted as p%; and based on the total mass of the conductive slurry, a mass percentage of the conductive agent is denoted as q%; where $2 \le q/p \le 20$, and further optionally, $3 \le q/p \le 15$.

## Positive electrode plate

According to a fifth aspect, this application proposes a positive electrode plate.

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is provided on either or both of the two opposite surfaces of the positive electrode current collector. The positive electrode film layer includes the polymer according to any one of the embodiments of the first aspect of this application or the polymer obtained using the method according to any one of the embodiments of the second aspect of this application. Owing to its excellent dispersion performance and certain adhesion performance, the polymer can be used as a dispersant in the positive electrode film layer and as an auxiliary agent for the binder. The positive electrode film layer can avoid introducing other dispersants, reducing the risk of damage to the positive electrode active material caused by other dispersants and ensuring the structural stability of the positive electrode film layer.

The positive electrode film layer includes a positive electrode active material, and the positive electrode active material may be a well-known positive electrode active material used for secondary batteries in the art. In an example, the positive electrode active material may include at least one of the following materials: a layered structure positive electrode active material (for example, ternary, lithium/sodium nickel oxide, lithium/sodium cobalt oxide, lithium/sodium manganese oxide, lithium/sodium-rich layered and rocksalt-type layered materials), an olivine-type phosphate active material, and a spinel structure positive electrode active material (for example, spinel lithium manganate, spinel lithium nickel manganese oxide, lithium-rich spinel lithium manganate, and lithium nickel manganese oxide).

For example, the general formula of the layered structure positive electrode active material is $Li_xA_yNi_aCo_bMn_cM_{(1-a-b-c)}Y_z$, where $0 \le x \le 2.1$, $0 \le y \le 2.1$, and $0.9 \le x+y \le 2.1$; $0 \le a \le 1$, $0 \le b \le 1$, $0 \le c \le 1$, and $0.1 \le a+b+c \le 1$; $1.8 \le z \le 3.5$; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Optionally, y=0. Specifically, the layered structure positive electrode active material may include one or more of lithium cobalt oxide LCO, lithium nickel oxide LNO, lithium manganese oxide LMO, $LiNi_{1/3}Co_{1/3}Mn_{1/3}O_2$ (NCM333), $LiNi_{0.8}Co_{0.1}Mn_{0.1}O_2$ (NCM811), and $LiNi_{0.3}Co_{0.2}Mn_{0.3}O_2$ (NCM523).

For example, the general formula of the olivine-type phosphate active material is $Li_xA_yMe_aM_bP_{1-c}X_cY_z$, where $0 \le x \le 1.3$, $0 \le y \le 1.3$, and $0.9 \le x+y \le 1.3$; $0.9 \le a \le 1.5$, $0 \le b \le 0.5$, and $0.9 \le a+b \le 1.5$; $0 \le c \le 0.5$; $3 \le z \le 5$; A is selected from one or more of Na, K, and Mg; Me is selected from one or more of Mn, Fe, Co, and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; and Y is selected from one or more of O and F. Specifically, the olivine-type phosphate active material includes one or more of $LiFePO_4$, $LiMnPO_4$, $LiNiPO_4$, and $LiCoPO_4$.

For example, the general formula of the spinel structure positive electrode active material is $Li_xA_yMn_aM_{2-a}Y_z$, where $0 \le x \le 2$, $0 \le y \le 1$, and $0.9 \le x+y \le 2$; $0.5 \le a \le 2$; $3 \le z \le 5$; A is selected from one or more of Na, K, and Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Specifically, the spinel structure positive electrode active material includes one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode current collector may be a metal foil or a composite current collector. As examples of metal foils, aluminum foil or aluminum alloy foil may be used. The composite current collector may include a polymer material matrix and a metal material layer formed on at least one surface of the polymer material matrix. For example, the metal material may include a combination selected from one or more of aluminum, aluminum alloys, nickel, nickel alloys, titanium, titanium alloys, silver, and silver alloys, and the polymer material matrix may include a combination selected from one or more of polypropylene (PP), polyethylene terephthalate (PET), polybutylene terephthalate (PBT), polystyrene (PS), and polyethylene (PE)

In some embodiments, the positive electrode film layer further optionally includes a positive electrode conductive agent. The positive electrode conductive agent is not limited to a particular type in this application. For example, the positive electrode conductive agent includes a combination of one or more selected from superconducting carbon, conductive carbon black, conductive graphite, acetylene black, carbon black, Ketjen black, carbon dots, carbon nanotubes, graphene, and carbon nanofiber. In some embodiments, based on a total mass of the positive electrode film layer, a mass percentage of the positive electrode conductive agent is below 5%.

In some embodiments, the positive electrode film layer further optionally includes a positive electrode binder. The positive electrode binder is not limited to a particular type in this application. For example, the positive electrode binder may include a combination of one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on a total mass of the positive electrode film layer, a mass percentage of the positive electrode binder is below 5%, and optionally, the mass percentage of the positive electrode binder is 1.0% to 2.5%. In this application, a molecular weight of the positive electrode binder is 500,000 to 2,000,000. For example, a molecular weight of polyvinylidene fluoride PVDF used as the positive electrode binder is 500,000 to 2,000,000. The polymer in the embodiments of the first aspect of this application may be used as an auxiliary agent for the positive electrode binder, which can improve the adhesion performance of the positive electrode film layer and reduce the risk of agglomeration of the positive electrode active material.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity.

In some embodiments, the positive electrode plate is prepared by the following steps: providing a positive electrode current collector; mixing a positive electrode active material, a polymer, a conductive agent, and a binder with a solvent to prepare a positive electrode active slurry, applying the positive electrode active slurry onto the positive electrode current collector, and curing the resulting product to form a positive electrode plate. The solvent may be N-methylpyrrolidone (NMP), but is not limited thereto.

In some embodiments, the conductive agent may be prepared into a conductive slurry, and then the conductive slurry and the positive electrode active material are mixed to prepare the positive electrode slurry. The conductive slurry may be prepared using the method according to any one of the embodiments of the third aspect of this application or may use the conductive slurry according to any one of the embodiments of the fourth aspect of this application. Alternatively, the conductive slurry is prepared directly using the polymer according to any one of the embodiments of the first aspect of this application or the polymer obtained using the method according to any one of the embodiments of the second aspect of this application.

Specifically, polymer powder may be added to the solvent for mixing to prepare a glue solution; then the conductive agent such as conductive carbon black is dispersed in the prepared glue solution to prepare the conductive slurry. After that, the positive electrode active material, the positive electrode binder, and other components are dispersed in the conductive slurry to prepare the positive electrode slurry. As a result, the conductive slurry prepared in this manner has more even dispersion of the conductive agent, preventing agglomeration due to the small particle size of the conductive agent, resulting in a more uniform distribution of the conductive agent, which can reduce the resistance of the

positive electrode film layer to a certain extent and improve the electrochemical performance of the secondary battery. In this application, the solvent in the prepared glue solution may be selected from commonly used solvent types in positive electrode slurry such as N-methylpyrrolidone NMP.

## Secondary battery

According to a sixth aspect, this application proposes a secondary battery.

The secondary battery includes a positive electrode plate, a negative electrode plate, and a separator, where the separator is disposed between the positive electrode plate and the negative electrode plate to isolate the positive electrode plate from the negative electrode plate.

In some embodiments, the positive electrode plate may use the positive electrode plate according to any one of the embodiments of the fifth aspect of this application, thereby reducing the resistance of the electrode plate and improving the cycling performance and charge-discharge performance of the secondary battery.

## Negative electrode plate

The negative electrode plate includes a negative electrode current collector and a negative electrode film layer disposed on at least one surface of the negative electrode current collector, and the negative electrode film layer includes a negative electrode active material. The negative electrode film layer includes the polymer according to any one of the embodiments of the first aspect of this application or the polymer obtained using the method according to any one of the embodiments of the second aspect of this application. Due to its excellent dispersion performance and certain adhesion performance, the polymer can be used as a dispersant in the negative electrode film layer and as an auxiliary agent for the binder. The negative electrode film layer can avoid introducing other dispersants, reducing the risk of damage to the negative electrode active material caused by other dispersants and ensuring the structural stability of the negative electrode film layer.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. In an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compounds, silicon-carbon composites, silicon-nitrogen composites, or silicon alloys. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a conductive agent. The conductive agent may be selected from at least one of superconducting carbon, acetylene black, conductive carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode film layer further optionally includes a negative electrode binder. The negative electrode binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS). In some embodiments, based on a total mass of the negative electrode film layer, a mass percentage of the negative electrode binder is below 5%, and optionally, the mass percentage of the negative electrode binder is 1.5% to 3%. In this application, a molecular weight of the negative electrode binder is 500,000 to 2,000,000. For example, a molecular weight of styrene-butadiene rubber SBR used as the negative electrode binder is 500,000 to 2,000,000. The polymer in the embodiments of the first aspect of this application may be used as an auxiliary agent for the styrene-butadiene rubber binder, which can improve the adhesion granularity of the negative electrode film layer and reduce the risk of agglomeration of the styrene-butadiene rubber active material.

In some embodiments, the negative electrode plate may be prepared in the following manner: The constituents used for preparing the negative electrode plate, for example, the negative electrode active material, an optional conductive agent, an optional binder, and any other constituents, are dispersed in a solvent (for example, deionized water) to prepare a negative electrode slurry; and the negative electrode slurry is applied onto the negative electrode current collector, followed by processes such as drying and cold pressing to obtain the negative electrode plate.

[Electrolyte]

The secondary battery further includes an electrolyte, where the electrolyte conducts ions between the positive electrode plate and the negative electrode plate. The electrolyte is not specifically limited to any particular type in this application, and may be selected depending on needs. For example, the electrolyte may be in a liquid state, a gel state, or an all-solid state.

In some embodiments, the electrolyte is an electrolyte solution. The electrolyte solution includes an electrolytic salt and a solvent.

For example, the electrolyte lithium salt may include a combination of one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

For example, the organic solvent may include a combination of one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

[Separator]

In some embodiments, the secondary battery further includes a separator. The separator is not specifically limited to any particular type in this application, and may select any well-known porous separator with good chemical stability and mechanical stability.

In some embodiments, the material of the separator may be selected from one or more of glass fiber, non-woven fabric, polyethylene, polypropylene, and polyvinylidene fluoride. The separator may be a single-layer film or a multi-layer composite film. When the separator is a multi-layer composite film, each layer is made of the same or different materials.

In some embodiments, the positive electrode plate, separator, and negative electrode plate may be made into an electrode assembly through a winding process or a lamination process.

This application has no specific limitation on a shape of the secondary battery, and the secondary battery may be cylindrical, rectangular, or of any other shape. FIG. 1 shows a rectangular secondary battery 5 as an example.

In some embodiments, as shown in FIG. 1 and FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52 whose quantity is adjustable as required.

The preparation method of secondary battery of this application is well known. In some embodiments, the positive electrode plate, the separator, the negative electrode plate, and the electrolyte may be assembled to form a secondary battery. For example, the positive electrode plate, the separator, and the negative electrode plate may be made into an electrode assembly through winding or lamination; and the electrode assembly is put in an outer package which is filled with electrolyte after drying, followed by processes such as vacuum packaging, standing, formation, and shaping, to obtain a secondary battery.

In some embodiments of this application, such secondary batteries of this application may be assembled into a battery module. The battery module may include a plurality of secondary batteries whose quantity may be adjusted based

on application and capacity of the battery module.

FIG. 3 is a schematic diagram of a battery module 4 as an example. As shown in FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened using fasteners.

Optionally, the battery module 4 may further include a shell with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

## Electric apparatus

According to a seventh aspect, this application provides an electric apparatus. The electric apparatus includes at least one of the secondary battery, the battery module, and the battery pack according to this application. The secondary battery, the battery module, or the battery pack may be used as a power source for the electric apparatus or an energy storage unit of the electric apparatus. The electric apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

FIG. 6 is a schematic diagram of an electric apparatus as an example. This electric apparatus 6 is a battery electric vehicle, a hybrid electric vehicle, a plug-in hybrid electric vehicle, or the like. To satisfy requirements of the electric apparatus for high power and high energy density, a battery pack 1 or a battery module may be used.

In another example, the electric apparatus may be a mobile phone, a tablet computer, a laptop computer, or the like. Such electric apparatus is generally required to be light and thin and may use a secondary battery as its power source.

## Examples

The following describes examples of this application. The examples described below are illustrative and only used to explain this application, and cannot be construed as limitations on this application. Examples whose techniques or conditions are not specified are made in accordance with techniques or conditions described in literature in the field, or made in accordance with product instructions. The reagents or instruments used are all conventional products that are commercially available if no manufacturer is indicated.

### Example 1

Preparation of dispersant polyvinylidene fluoride

Example 1-1

Step S1. Into a 50 L reactor, 30 kg of deionized water (with a conductivity of less than or equal to 2 $\mu$s/cm), 15 g of 100% emulsifier perfluorooctanoic acid alkali metal salt, and 36 g of initiator (5% potassium persulfate solution) accounting for 40% of the total amount were added sequentially, and the reactor was then sealed.

Step S2. The reactor was evacuated and purged with nitrogen gas. This evacuation and purging process was repeated until the oxygen concentration inside the reactor was reduced to less than 100 ppm.

Step S3. Vinylidene fluoride monomer was introduced into the reactor until the pressure in the reactor reached 7.0 MPa.

Step S4. The temperature in the reactor was raised to 80°C to initiate the reaction. During the reaction, vinylidene fluoride monomer was continuously fed into the reactor to maintain a constant reaction pressure.

Step S5. When the amount of vinylidene fluoride monomer introduced reached 50% of the total amount (that is, 2.4 kg), 36 g of the initiator (potassium persulfate solution at 5% concentration, representing 40% of the total initiator amount) was added. The reaction pressure was maintained at 7.0 MPa, and a mixed gas of vinylidene fluoride monomer

and a second monomer (methyl methacrylate monomer, added at a mass ratio of 1:1 relative to vinylidene fluoride) was introduced into the reactor.

Step S6. After the entire amount of the second monomer (1.2 kg) was added, and the amount of vinylidene fluoride monomer introduced reached 80% of the total amount (that is, 3.6 kg), the remaining 20% of the initiator (18 g) was added. The reaction pressure was maintained at 7.0 MPa, and the remaining 20% of vinylidene fluoride monomer (1.2 kg) was introduced into the reactor.

Step S7. When the reaction was completed, the pressure inside the reactor dropped to 2.0 MPa. Unreacted vinylidene fluoride monomer was recovered.

Step S8. The reaction product was coagulated, washed, separated, dried, and crushed to obtain a polymer PVDF.

Example 1-2 and Example 1-3

The dispersants PVDF of Examples 1-2 and 1-3 were prepared using a method similar to that of Example 1-1, except that the molar percentage of the second monomer was adjusted in each of Examples 1-2 and 1-3.

Example 1-4 and Example 1-5

The dispersants PVDF of Examples 1-4 and 1-5 were prepared using a method similar to that of Example 1-1, except that at least one of the reaction temperature of step S4 and the reaction pressure of step S3 was adjusted in each of Examples 1-4 and 1-5.

Example 1-6

The dispersant PVDF of Example 1-6 was prepared using a method similar to that of Example 1-1, except that the type of the second monomer was adjusted in Example 1-6.

Examples 1-7 to 1-9

The dispersants PVDF of Example 1-7 to Example 1-9 were prepared in a similar method as Example 1-1, except that the reaction rate was adjusted by adjusting the amount of initiator in each of Example 1-7 to Example 1-9, thereby adjusting the particle size of the polymer. For example, compared to Example 1-1, the amount of initiator in Example 1-7 was increased by 10%; the amount of initiator in Example 1-8 was increased by 5%; and the amount of initiator in Example 1-9 was increased by 2%.

The parameters of Example 1-1 to Example 1-9 are shown in Table 1.

**Table 1**

| No. | Molar mass of VDF (mol) | Second monomer | | Mass ratio A of second monomer to VDF | Polymer | | | Reaction temperature in S4 (°C) | Reaction pressure in S3 (Mpa) |
|---|---|---|---|---|---|---|---|---|---|
| | | Type | Molar mass (mol) | | Weight-average molecular weight (Da) | Viscosity (mPa*s) | Particle size (μm) | | |
| Example 1-1 | 10 | Polymethacrylic acid | 1.0 | 2.5:10 | 190,000 | 2,500 | 3.0 | 80 | 7.0 |
| Example 1-2 | 10 | Polymethacrylic acid | 2.5 | 1.0:10 | 180,000 | 2,000 | 3.0 | 80 | 7.0 |
| Example 1-3 | 10 | Polymethacrylic acid | 3.0 | 3.0:10 | 200,000 | 3000 | 3.0 | 80 | 7.0 |
| Example 1-4 | 10 | Polymethacrylic acid | 1.0 | 1.0:10 | 190,000 | 2,500 | 3.2 | 75 | 7.0 |
| Example 1-5 | 10 | Polymethacrylic acid | 1.0 | 1.0:10 | 190,000 | 2,500 | 2.9 | 80 | 7.5 |
| Example 1-6 | 10 | Ethyl acrylate | 1.0 | 1.0:10 | 190,000 | 2,500 | 3.0 | 80 | 7.0 |
| Example 1-7 | 10 | Polymethacrylic acid | 1.0 | 1.0:10 | 190,000 | 2,500 | 1.0 | 80 | 7.0 |
| Example 1-8 | 10 | Polymethacrylic acid | 1.0 | 1.0:10 | 190,000 | 2,500 | 4.9 | 80 | 7.0 |
| Example 1-9 | 10 | Polymethacrylic acid | 1.0 | 1.0:10 | 190,000 | 2,500 | 7.3 | 80 | 7.0 |

Example 2

Example 2-1

1. Preparation of positive electrode plate

1.1. A 12 μm thick aluminum foil was used as a positive electrode current collector.

1.2. Preparation of conductive slurry

16,000 g of solvent N-methylpyrrolidone was added into the stirring tank.

300 g of dispersant PVDF prepared in Example 1-1 was added into the solvent NMP in the stirring tank, and the stirring tank ran at a speed of 1000 rpm at room temperature for 60 mins to obtain a prepared glue solution.

1600 g of conductive carbon black powder was added into the prepared glue solution, and the stirring tank ran at a speed of 800 rpm for 60 mins. The cooling water circulation in the stirring tank was started, and a conductive slurry was obtained after the stirring was completed.

1.3. Preparation of positive electrode slurry

A positive electrode active material ($LiNi_{0.6}Co_{0.2}Mn_{0.2}O_2$) and polyvinylidene fluoride were added into a conductive slurry, followed by thorough stirring to prepare a uniform positive electrode slurry with a solid content of 73%. Then the positive electrode slurry was evenly applied onto a surface of a positive electrode current collector aluminum foil, followed by drying and cold pressing, to obtain a positive electrode plate. A molecular mass of the polytetrafluoroethylene (PTFE) was 800,000. A mass ratio of the positive electrode active material, the conductive carbon black powder, the polyvinylidene fluoride, and NMP was 96.9:2.1:1:21.

2. Preparation of negative electrode plate

Copper foil with a thickness of 8 μm was used as a negative electrode current collector.

A negative electrode active material graphite, a binder styrene-butadiene rubber (SBR), a thickener sodium carboxymethyl cellulose (CMC-Na), and a conductive agent carbon black (Super P) were thoroughly mixed and stirred in a proper amount of solvent deionized water at a mass ratio of 96.2:1.8:1.2:0.8 to form a uniform negative electrode slurry. The negative electrode slurry was evenly applied onto a surface of the negative electrode current collector copper foil, followed by drying and cold pressing, to obtain a negative electrode plate.

3. Separator

A porous polyethylene (PE) film was used as a separator.

4. Preparation of electrolyte

In an environment with a water content of less than 10 ppm, non-aqueous organic solvents ethylene carbonate EC and diethyl carbonate DMC were mixed at a volume ratio of 1:1 to obtain an electrolyte solvent. A lithium salt and the mixed solvent were then mixed to prepare an electrolyte with a lithium salt concentration of 1 mol/L.

5. Preparation of secondary battery

The positive electrode plate, the separator, and the negative electrode plate were sequentially stack so that the separator was located between the positive electrode plate and negative electrode plate to provide separation. Then the resulting stack was wound to obtain an electrode assembly. The electrode assembly was placed into an outer package and dried, and the electrolyte was then injected. Processes such as vacuum packaging, standing, formation, and shaping were performed to obtain a lithium-ion battery.

Example 2-2 to Example 2-9

The secondary batteries of Examples 2-2 to 2-9 were prepared using a method similar to that of Example 2-1, except that the type of dispersant PVDF was adjusted in each of Examples 2-2 to 2-9, in which use the dispersants PVDF prepared in Example 1-2 to Example 1-9, respectively.

Example 2-10 to Example 2-13

The secondary batteries of Examples 2-10 to 2-13 were prepared using a method similar to that of Example 2-1, except that the amount of dispersant PVDF used was adjusted in each of Examples 2-10 to 2-13.

**Comparative Example**

The secondary battery of Comparative Example was prepared using a method similar to that of Example 2-1, except that the preparation method of the positive electrode slurry of Comparative Example was adjusted, specifically as follows: the positive electrode active material ($LiNi_{0.6}Co_{0.2}Mn_{0.2}O_2$), conductive carbon black powder, polyvinylidene fluoride, and NMP were mixed in a mass ratio of 96.9:2.1:1:21 and fully stirred and to prepare a uniform positive electrode slurry, and the positive electrode slurry was then evenly applied on a surface of the positive electrode current collector aluminum foil, followed by drying and cold pressing, to obtain a positive electrode plate.

The parameters of Examples 2-1 to 2-13 and Comparative Example are shown in Table 2.

**Tests**

**I. Performance test of polymer**

1. Test for weight-average molecular weight of polymer

A Waters 2695 Isocratic HPLC gel permeation chromatography (differential refractive index detector 2141) was used. A 3.0% polystyrene solution sample was used as a reference, and matched chromatographic columns (oily: Styragel HT5DMF7.8×300 mm + Styragel HT4) were selected. A 3.0% polymer solution was prepared with purified N-methylpyrrolidone (NMP) solvent, and the prepared solution was then left standing for one day for later use. During testing, a syringe was used first to draw tetrahydrofuran for rinsing, which was repeated several times. Then 5 ml of the experimental solution was drawn, the air was expelled from the syringe, and the needle tip was dried. Finally, the sample solution was slowly injected into the injection port. Data was obtained after the reading stabilized and the weight-average molecular weight was read.

2. Test for viscosity of conductive slurry

The viscosity of the conductive slurry was measured using a rotational viscometer. An appropriate rotor was selected, and the viscometer rotor was fastened. The conductive slurry was placed directly beneath the viscometer rotor so that the conductive slurry just covered the rotor's scale line. The instrument model was Shanghai Fangrui NDJ-5S; the rotors used were 63# (2000-10000 mPa.s) and 64# (10000-50000 mPa.s); the rotation speed was set to 12 rpm; the test temperature was maintained at 25°C; and the test duration was 5 minutes. The data was read after the reading stabilized.

3. Test for filtration performance of conductive slurry

A 500 ml beaker was placed beneath the 200-mesh filter screen support. 500 ml of conductive slurry was placed on the filter screen for filtration. The duration when the slurry volume in the beaker reached 300 ml was recorded. This duration was used to evaluate the filtration performance of the slurry. If the filtration duration was less than 120 seconds, it indicated that the filtration performance of the slurry was satisfactory; if the slurry could not pass through the filter screen, it indicated that the filtration performance of the slurry was poor and was judged as "NG".

4. Difference in solid content between the upper and lower layers of the conductive slurry after 24 hours of standing

A small piece of electrode plate was weighed in a moisture analyzer and recorded as M0, then the instrument was reset to zero. A small amount of the upper layer conductive slurry was taken and applied onto the electrode plate, which was then placed into the moisture analyzer and weighed, recorded as M1. The device was closed, and the drying process was initiated. After completion, the weight was recorded as M2, and the solid content was calculated as (M2-M0)/(M1-M0). The same method was used to measure the solid content of the lower layer conductive slurry. The difference in solid content between the upper and lower layers of the conductive slurry after standing for 24 hours was determined by subtracting the solid content of the upper layer from that of the lower layer.

**II. Performance test for secondary battery**

5. Test for adhesion of positive electrode plate

In accordance with the national standard GB-T 2790-1995 "Adhesives, 180° Peel Strength Test Method", the adhesion testing process for the examples and comparative example was as follows: A sample with a width of 30 mm and a length of 100-160 mm was cut using a blade. A specialized double-sided tape was attached to a steel plate, with the tape having a width of 20 mm and a length of 90-150 mm. The insulated coating side of the previously cut electrode plate sample was adhered to the double-sided tape. A 2 kg roller was then used to roll over the sample three times in the same direction. A paper strip with a width equal to that of the electrode plate and a length of 250 mm was fixed to the current collector and secured with crepe tape. The power of the tensile tester (with a sensitivity of 1 N) from SASTEST was turned on, and the indicator light was illuminated. The limit block was adjusted to an appropriate position, and the end of the steel plate without the electrode plate was fixed with the lower clamp. The paper strip was folded upward and fixed with the upper clamp. The position of the upper clamp was adjusted using the "up" and "down" buttons on the manual controller attached to the tensile tester. The test was then conducted, and the value was recorded at a stretching speed of 50 mm/min. The force at which the electrode plate was in equilibrium was divided by the width of the tape to calculate the adhesion per unit length of the positive electrode film layer, and this value characterized the bonding strength between the positive electrode film layer and the current collector.

6. Film resistance of the positive electrode plate

The dried positive electrode plate was cut at the left, middle, and right positions into small circular pieces with a diameter of 3 mm. The power of an electrode plate resistance meter from Initial Energy Science&Technology Co., Ltd was turned on, and the small circular pieces were placed at an appropriate position on the "probe" of the resistance meter. The "Start" button was clicked, and the reading was recorded after it stabilized. Each small circular piece was tested at two positions, and the average value of the six measurements was calculated as the film resistance of the electrode plate.

7. Direct current resistance DCR of the secondary battery (Ω)

The direct current resistance testing process for the secondary battery was as follows: At 25°C, the battery corresponding to Example 1 was charged at a constant current of 1/3C to 4.3 V, followed by a constant voltage charge at 4.3 V until the current dropped to 0.05C. After the secondary battery was left standing for 5 mins, the voltage V1 was recorded. The battery was then discharged at 1/3C for 30 s, and the voltage V2 was recorded. The direct current resistance (DCR) of the secondary battery was calculated as 3*(V2-V1)/C.

**Test result**

The effect of this application on improving the performance of the secondary battery is shown in Table 2.

**Table 2**

| No. | Conductive slurry | | | | | | | | | Performance of positive electrode plate | | | Performance of secondary battery |
|---|---|---|---|---|---|---|---|---|---|---|---|---|---|
| | Mass percentage of polymer in conductive slurry (p%) | Mass percentage of conductive agent in conductive slurry (q%) | Solid content of conductive slurry | q/p | Viscosity (mPa*s) | Filtration performance | Difference of solid content between upper and lower layers after 24 hours of standing | Whether gel sedimentation occurs in conductive slurry after storage for 60 days | Gel state after 24 hours of standing | Mass percentage of conductive agent | Adhesion (N/m) | Film resistance Ω) | DCR/50% SOC (mΩ) |
| Example 2-1 | 1.5% | 13.5% | 15.0% | 9 | 800 | OK | 0.00% | No | N | 1.0% | 23.0 | 0.23 | 0.25 |
| Example 2-2 | 1.5% | 13.5% | 15.0% | 9 | 700 | OK | 0.00% | No | N | 1.0% | 21.0 | 0.24 | 0.25 |
| Example 2-3 | 1.5% | 13.5% | 15.0% | 9 | 900 | OK | 0.00% | No | N | 1.0% | 25.0 | 0.23 | 0.25 |
| Example 2-4 | 1.5% | 13.5% | 15.0% | 9 | 800 | OK | 0.00% | No | N | 1.0% | 23.0 | 0.23 | 0.25 |
| Example 2-5 | 1.5% | 13.5% | 15.0% | 9 | 800 | OK | 0.00% | No | N | 1.0% | 23.0 | 0.23 | 0.25 |
| Example 2-6 | 1.5% | 13.5% | 15.0% | 9 | 830 | OK | 0.00% | No | N | 1.0% | 23.5 | 0.23 | 0.25 |
| Example 2-7 | 1.5% | 13.5% | 15.0% | 9 | 790 | OK | 0.00% | No | N | 1.0% | 20.0 | 0.23 | 0.25 |
| Example 2-8 | 1.5% | 13.5% | 15.0% | 9 | 850 | OK | 0.00% | No | N | 1.0% | 23.2 | 0.23 | 0.25 |
| Example 2-9 | 1.5% | 13.5% | 15.0% | 9 | 890 | OK | -0.60% | No | N | 1.0% | 23.8 | 0.28 | 0.31 |
| Example 2-10 | 0.675% | 13.5% | 14.6% | 20 | 650 | OK | -0.70% | No | N | 1.0% | 19.5 | 0.30 | 0.35 |
| Example 2-11 | 0.96% | 13.5% | 14.8% | 14 | 680 | OK | 0.00% | No | N | 1.0% | 19.8 | 0.29 | 0.33 |
| Example 2-12 | 4.5% | 13.5% | 15.5% | 3 | 950 | OK | 0.00% | No | N | 1.0% | 26.3 | 0.26 | 0.28 |
| Example 2-13 | 6.75% | 13.5% | 16.1% | 2 | 1080 | OK | 0.00% | No | N | 1.0% | 28.0 | 0.32 | 0.35 |
| Comparative Example | / | / | | | | / | / | / | / | / | 19.8 | 1.00 | 0.82 |

As can be seen from Table 2, in the comparative example, conductive carbon black powder is directly mixed with the positive electrode active material to prepare a positive electrode slurry, with a higher risk of agglomeration of the conductive carbon black, resulting in higher electrode plate resistance and relatively poor kinetic performance. In contrast, in Example 2-1 to Example 2-9 of this application, the conductive carbon black powder is prepared as a conductive slurry, and the polymer as a dispersant can effectively disperse the conductive carbon black powder evenly, resulting in better dispersion performance of the conductive slurry, less prone to sedimentation, and having more uniform performance. When the conductive slurry and the positive electrode active material are mixed to prepare the positive electrode slurry, the resistance of the positive electrode plate can be improved, and the kinetic performance of the positive electrode plate can be improved. Additionally, because the polymer has a certain viscosity, it can help improve the adhesion within the positive electrode plate. Moreover, the storage performance of the examples is relatively stable, without gel sedimentation after standing for 24 hours, and still without gel sedimentation after 60 days of storage (60D).

In Example 2-10 to Example 2-13, by adjusting the amount of dispersant polymer, the degree of dispersion of the conductive agent can be adjusted, the resistance of the electrode plate can be reduced, and the viscosity can be regulated to a certain extent, adjusting the adhesion strength within the electrode plate.

Although this application has been described with reference to the preferred embodiments, various modifications can be made to this application without departing from the scope of this application and the components therein can be replaced with equivalents. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A polymer, comprising a structural unit represented by formula (1) and structural unit(s) represented by formula (2),

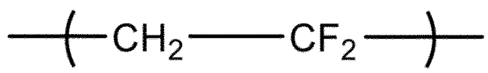

formula (1);

and

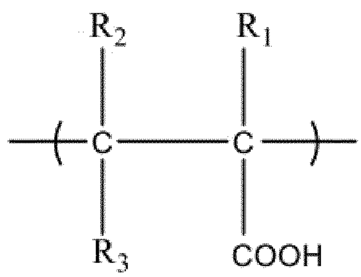

formula (2);

wherein
in formula (2),
$R_1$, $R_2$, and $R_3$ are each independently selected from a hydrogen atom, a halogen atom, or a substituted or unsubstituted C1-C10 alkyl group.

2. The polymer according to claim 1, wherein $R_1$, $R_2$, and $R_3$ are each independently selected from a hydrogen atom, a halogen atom, or a substituted or unsubstituted C1-C5 alkyl group.

3. The polymer according to claim 1 or 2, wherein the structural unit(s) represented by formula (2) comprise(s) one or more selected from structural units represented by formulas (2-1) to (2-10):

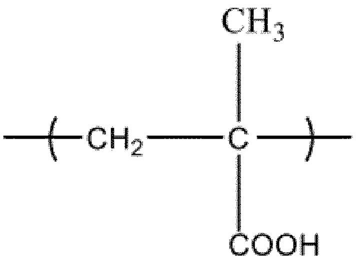 formula (2-1), 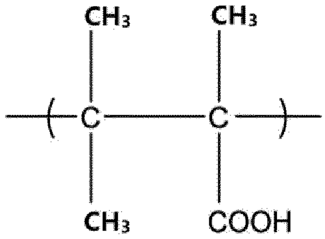 formula (2-2), 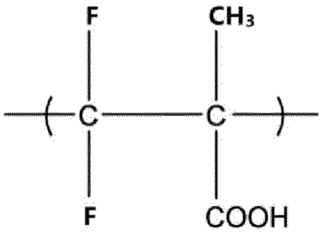 formula (2-3), 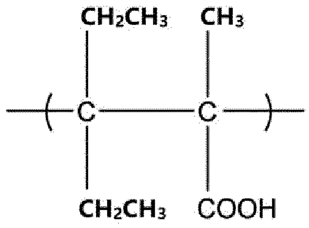 formula (2-4), 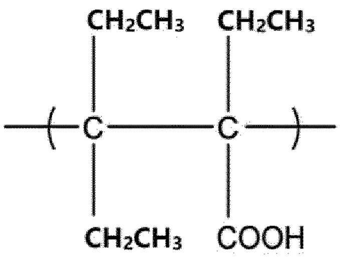 formula (2-5), 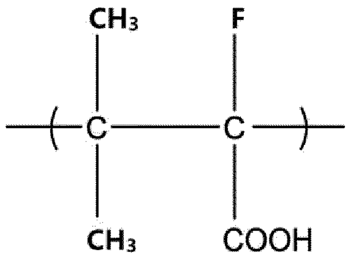 formula (2-6), 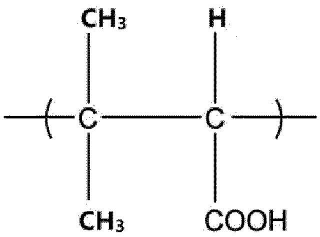 formula (2-7), 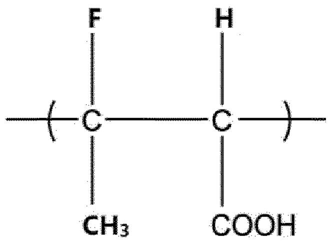 formula (2-8), 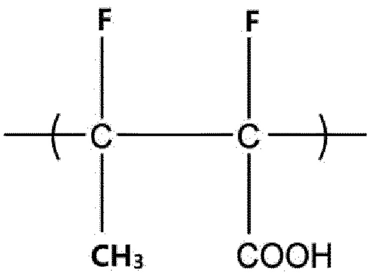 formula (2-9), and 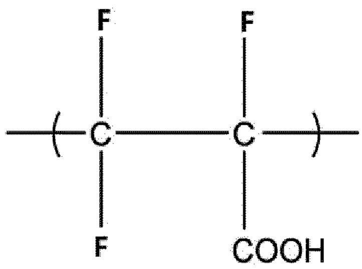 formula (2-10).

**4.** The polymer according to any one of claims 1 to 3, wherein the polymer meets at least one of conditions (I) to (III):

(I) a weight-average molecular weight of the polymer is $1.5\times10^5$ Da to $2.0\times10^5$ Da;
(II) the number of structural units represented by formula (1) is n, wherein $100\leq n\leq150$; and
(III) the number of structural units represented by formula (2) is m, wherein $100\leq m\leq150$.

**5.** The polymer according to any one of claims 1 to 4, wherein the polymer meets at least one of conditions (1) to (3):

(1) a viscosity of the polymer is C mPa*s, wherein $500\leq C\leq3000$;

(2) a glass transition temperature of the polymer is Tg°C, wherein 150≤Tg≤180; and
(3) a crystallinity of the polymer under differential scanning calorimetry DSC testing is 40% to 50%.

**6.** The polymer according to any one of claims 1 to 5, wherein the polymer is particulate, and a median particle size by volume of the polymer is Dv50 μm, wherein 1≤Dv50≤5.

**7.** A method for preparing a polymer, comprising:

providing a first monomer and a second monomer comprising a structural unit represented by formula (2); and polymerizing the first monomer and the second monomer in the presence of a free radical initiator to prepare a polymer, wherein
the first monomer comprises vinylidene fluoride;
the structural unit represented by formula (2) is as follows:

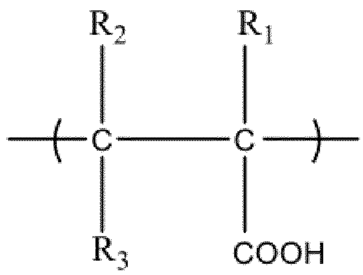 formula (2);

wherein
in formula (2),
$R_1$, $R_2$, and $R_3$ are each independently selected from a hydrogen atom, a halogen atom, or a substituted or unsubstituted C1-C10 alkyl group.

**8.** The method according to claim 7, wherein the step of polymerizing the first monomer and the second monomer in the presence of a free radical initiator to prepare a polymer comprises:

homopolymerizing the first monomer in the presence of a free radical initiator to prepare a first block polymer;
copolymerizing the first monomer, the second monomer, and the first block polymer in the presence of a free radical initiator to prepare a second block polymer; and
copolymerizing the first monomer and the second block polymer in the presence of a free radical initiator to prepare the polymer.

**9.** The method according to claim 7 or 8, wherein based on a total molar mass of the first monomer and the second monomer, a ratio of a molar percentage of the second monomer to a molar percentage of the first monomer is A, wherein 0.10≤A≤0.30.

**10.** A method for preparing a conductive slurry, comprising:

mixing a polymer with a solvent to prepare a prepared glue solution; and
dispersing a conductive agent in the prepared glue solution to prepare a conductive slurry; wherein
the polymer comprises the polymer according to any one of claims 1 to 6 or the polymer obtained using the method according to any one of claims 7 to 9.

**11.** The method according to claim 10, wherein

based on a total mass of the conductive slurry, a mass percentage of the polymer is denoted as p%; and based on the total mass of the conductive slurry, a mass percentage of the conductive agent is denoted as q%; wherein

$$2 \le q/p \le 20.$$

12. The method according to claim 11, wherein $3 \leq q/p \leq 15$.

13. A conductive slurry, comprising a conductive agent and a polymer, wherein the polymer comprises the polymer according to any one of claims 1 to 6 or the polymer obtained using the method according to any one of claims 7 to 9.

14. The conductive slurry according to claim 13, wherein

based on a total mass of the conductive slurry, a mass percentage of the polymer is denoted as p%; and based on the total mass of the conductive slurry, a mass percentage of the conductive agent is denoted as q%; wherein

$$2 \leq q/p \leq 20.$$

15. The conductive slurry according to claim 14, wherein $3 \leq q/p \leq 15$.

16. A method for preparing a positive electrode plate, comprising:

providing a positive electrode current collector; and
mixing a positive electrode active material, a polymer, a conductive agent, and a binder with a solvent to prepare a positive electrode slurry, applying the positive electrode slurry onto the positive electrode current collector, and curing the resulting product to form a positive electrode plate; wherein the polymer comprises the polymer according to any one of claims 1 to 6 or the polymer obtained using the method according to any one of claims 7 to 9.

17. The method according to claim 16, wherein the step of mixing a positive electrode active material, a polymer, a conductive agent, and a binder with a solvent to prepare a positive electrode slurry comprises:

mixing the polymer with the solvent to prepare a prepared glue solution;
dispersing the conductive agent in the prepared glue solution to prepare a conductive slurry; and
mixing the conductive slurry with the positive electrode active material to prepare the positive electrode slurry.

18. A positive electrode plate, prepared using the method according to claim 16 or 17.

19. A secondary battery, comprising the positive electrode plate according to claim 18.

20. An electric apparatus, comprising the secondary battery according to claim 19.

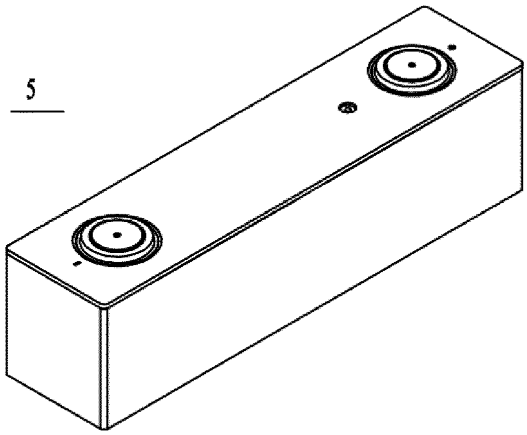


FIG. 1

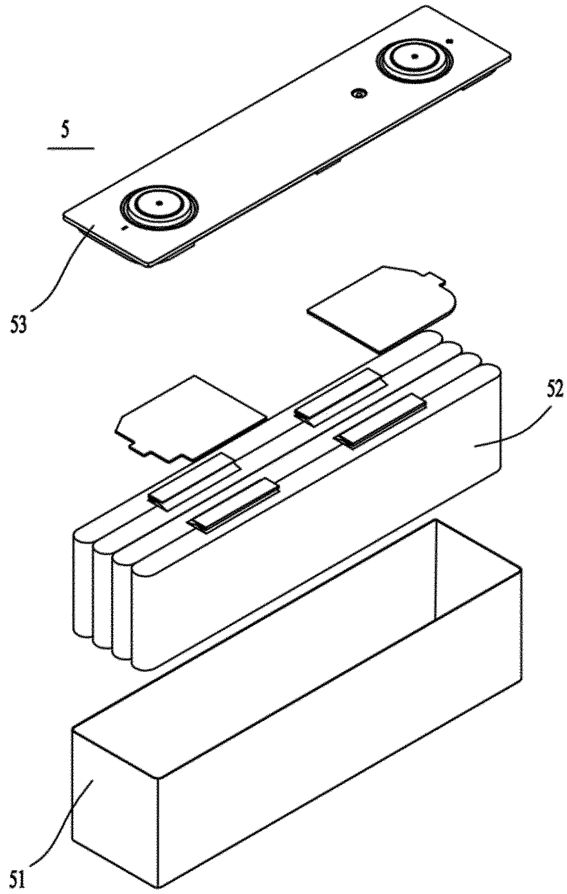


FIG. 2

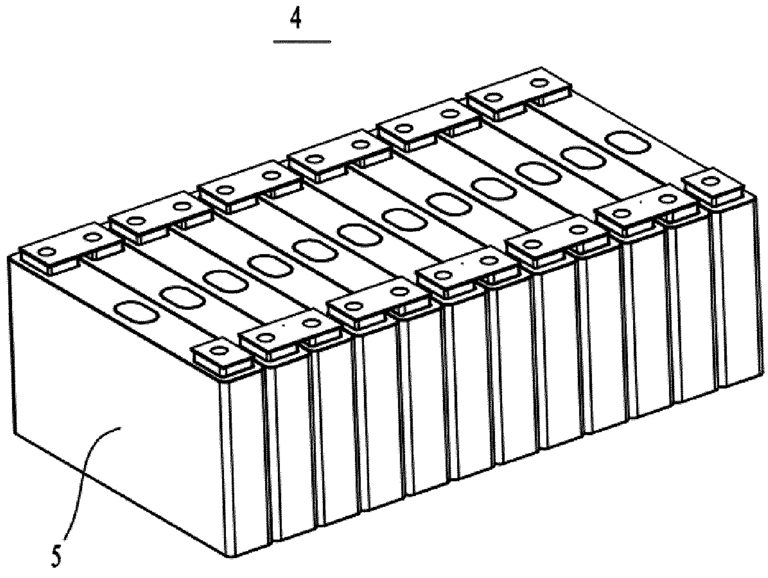


FIG. 3

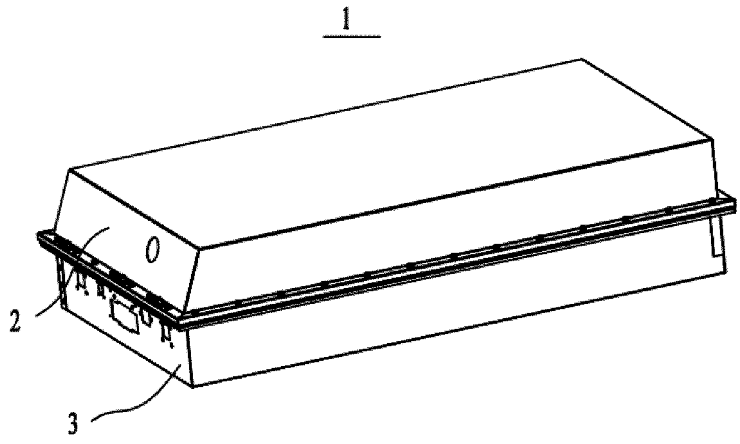


FIG. 4

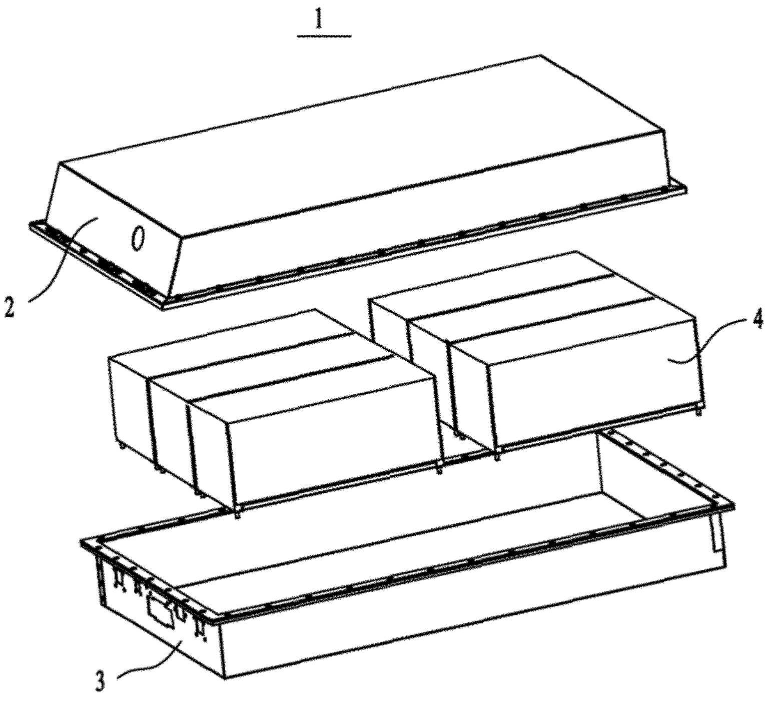


FIG. 5

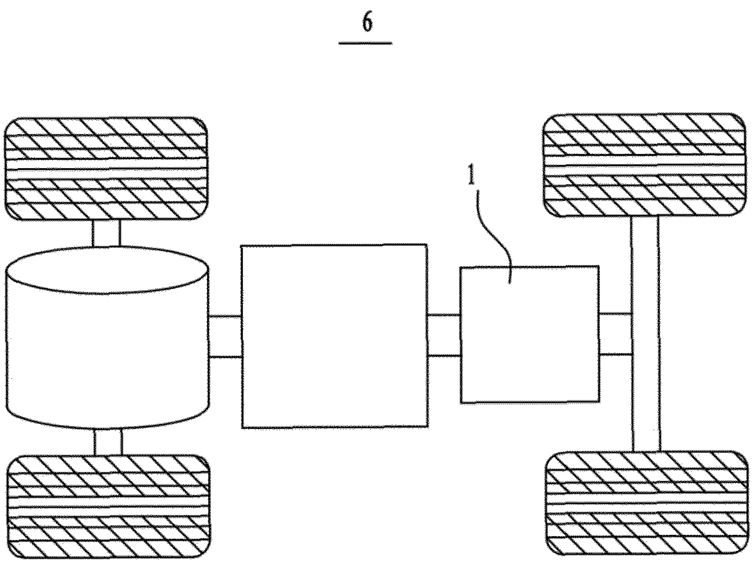


FIG. 6

**INTERNATIONAL SEARCH REPORT**

International application No.
**PCT/CN2022/128800**

**A. CLASSIFICATION OF SUBJECT MATTER**

C08F214/22(2006.01)i； C08F220/06(2006.01)i； H01M4/131(2010.01)i； H01M4/1391(2010.01)i； H01M4/62(2006.01)i； H01M10/0525(2010.01)i

According to International Patent Classification (IPC) or to both national classification and IPC

**B. FIELDS SEARCHED**

Minimum documentation searched (classification system followed by classification symbols)

C08F H01M

Documentation searched other than minimum documentation to the extent that such documents are included in the fields searched

Electronic data base consulted during the international search (name of data base and, where practicable, search terms used)

CNTXT; ENTXT; DWPI; CNKI; WEB OF SCIENCE: 偏氟乙烯, 偏二氟乙烯, 丙烯酸, 分散, 导电浆料, 极片, 二次电池, VDF, vinylidene fluoride, acrylic acid, disper+, conductive paste, pole sheet, secondary battery

**C. DOCUMENTS CONSIDERED TO BE RELEVANT**

| Category* | Citation of document, with indication, where appropriate, of the relevant passages | Relevant to claim No. |
|---|---|---|
| X | JP 2012219125 A (KUREHA CORP.) 12 November 2012 (2012-11-12)<br>description, paragraphs 0021-0091 | 1-20 |
| X | CN 104126243 A (SOLVAY SPECIALTY POLYMERS ITALY S.P.A.) 29 October 2014 (2014-10-29)<br>description, paragraphs 0017-0102 | 1-20 |
| X | WO 2018164094 A1 (SHOWA DENKO K. K.) 13 September 2018 (2018-09-13)<br>description, paragraphs 25-26 | 1-20 |
| X | WO 2018092675 A1 (KUREHA CORP.) 24 May 2018 (2018-05-24)<br>claims 1-10 | 1-20 |
| X | CN 104497190 A (ZHEJIANG FLUORINE CHEMICAL NEW MATERIAL CO., LTD.) 08 April 2015 (2015-04-08)<br>claims 1-8 | 1-20 |
| X | CN 111718452 A (SHENZHEN XINYUREN TECHNOLOGY CO., LTD.) 29 September 2020 (2020-09-29)<br>embodiment 2 | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 June 2023** | **28 June 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2022/128800**

**C. DOCUMENTS CONSIDERED TO BE RELEVANT**

| Category* | Citation of document, with indication, where appropriate, of the relevant passages | Relevant to claim No. |
|---|---|---|
| X | CN 112159493 A (ZHEJIANG QUZHOU JUSU CHEMICAL INDUSTRY CO., LTD. et al.) 01 January 2021 (2021-01-01)<br>embodiment 3 | 1-20 |
| X | CN 112175127 A (ZHEJIANG QUZHOU JUSU CHEMICAL INDUSTRY CO., LTD. et al.) 05 January 2021 (2021-01-05)<br>embodiment 3 | 1-20 |
| X | CN 114989344 A (WANHUA CHEMICAL GROUP CO., LTD.) 02 September 2022 (2022-09-02)<br>embodiment 2 | 1-2, 7, 10-18 |
| X | WO 2008129041 A1 (SOLVAY SOLEXIS S.P.A et al.) 30 October 2008 (2008-10-30)<br>embodiments 1-3 | 1-2, 7, 10-18 |
| X | WO 2012084578 A1 (SOLVAY SPECIALTY POLYMERS ITALY S.P.A. et al.) 28 June 2012 (2012-06-28)<br>embodiment 1 | 1-2, 7, 10-18 |
| X | JP 2010031288 A (UNIMATEC CO., LTD.) 12 February 2010 (2010-02-12)<br>embodiment 4 | 1-2, 7 |
| X | CN 108467451 A (ZHEJIANG QUZHOU JUSU CHEMICAL INDUSTRY CO., LTD. et al.) 31 August 2018 (2018-08-31)<br>embodiment 1 | 1-2, 7 |
| X | CN 108484814 A (ZHEJIANG QUZHOU JUSU CHEMICAL INDUSTRY CO., LTD. et al.) 04 September 2018 (2018-09-04)<br>embodiment 1 | 1-2, 7 |
| X | CN 106336476 A (ZHEJIANG FLUORINE CHEMICAL NEW MATERIAL CO., LTD.) 18 January 2017 (2017-01-18)<br>embodiment 4 | 1-2, 7 |

Form PCT/ISA/210 (second sheet) (July 2022)

**INTERNATIONAL SEARCH REPORT**
**Information on patent family members**

International application No.
**PCT/CN2022/128800**

| Patent document cited in search report | Publication date (day/month/year) | Patent family member(s) | Publication date (day/month/year) |
|---|---|---|---|
| JP 2012219125 A | 12 November 2012 | JP 5701131 B2 | 15 April 2015 |
| | | KR 20120113659 A | 15 October 2012 |
| | | KR 101352229 B1 | 15 January 2014 |
| CN 104126243 A | 29 October 2014 | WO 2013092446 A1 | 27 June 2013 |
| | | US 2014329003 A1 | 06 November 2014 |
| | | US 9595714 B2 | 14 March 2017 |
| | | JP 2015506083 A | 26 February 2015 |
| | | JP 6258215 B2 | 10 January 2018 |
| | | EP 2795701 A1 | 29 October 2014 |
| | | EP 2795701 B1 | 02 November 2016 |
| | | KR 20140116108 A | 01 October 2014 |
| | | KR 101998905 B1 | 10 July 2019 |
| WO 2018164094 A1 | 13 September 2018 | JP 2020074261 A | 14 May 2020 |
| | | TW 201843870 A | 16 December 2018 |
| WO 2018092675 A1 | 24 May 2018 | None | |
| CN 104497190 A | 08 April 2015 | CN 104497190 B | 21 September 2016 |
| CN 111718452 A | 29 September 2020 | None | |
| CN 112159493 A | 01 January 2021 | CN 112159493 B | 13 May 2022 |
| | | WO 2022041977 A1 | 03 March 2022 |
| | | US 2022356280 A1 | 10 November 2022 |
| | | JP 2022552924 W | 21 December 2022 |
| CN 112175127 A | 05 January 2021 | CN 112175127 B | 19 July 2022 |
| CN 114989344 A | 02 September 2022 | None | |
| WO 2008129041 A1 | 30 October 2008 | TW 200911848 A | 16 March 2009 |
| | | TWI 437009 B | 11 May 2014 |
| | | EP 2147029 A1 | 27 January 2010 |
| | | EP 2147029 B1 | 20 February 2013 |
| | | KR 20100016468 A | 12 February 2010 |
| | | KR 101529740 B1 | 18 June 2015 |
| | | JP 2010525124 A | 22 July 2010 |
| | | JP 5283688 B2 | 04 September 2013 |
| | | US 2010133482 A1 | 03 June 2010 |
| | | US 8337725 B2 | 25 December 2012 |
| WO 2012084578 A1 | 28 June 2012 | JP 2014502650 A | 03 February 2014 |
| | | JP 5946840 B2 | 06 July 2016 |
| | | KR 20140012037 A | 29 January 2014 |
| | | KR 101848113 B1 | 11 April 2018 |
| | | US 2013264522 A1 | 10 October 2013 |
| | | US 9441054 B2 | 13 September 2016 |
| | | EP 2655442 A1 | 30 October 2013 |
| | | EP 2655442 B1 | 04 March 2015 |
| JP 2010031288 A | 12 February 2010 | JP 5136535 B2 | 06 February 2013 |
| CN 108467451 A | 31 August 2018 | CN 108467451 B | 13 April 2021 |
| CN 108484814 A | 04 September 2018 | CN 108484814 B | 09 April 2021 |
| CN 106336476 A | 18 January 2017 | CN 106336476 B | 10 December 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211266304